(19) Europäisches Patentamt
European Patent Office
Office européen des brevets

(11) **EP 2 920 106 B1**

(12) **EUROPEAN PATENT SPECIFICATION**

(45) Date of publication and mention
of the grant of the patent:
**07.03.2018  Bulletin 2018/10**

(51) Int Cl.:
*A23L 2/54* *(2006.01)*    *A23L 3/16* *(2006.01)*
*B67C 3/00* *(2006.01)*

(21) Application number: **13838156.1**

(22) Date of filing: **11.09.2013**

(86) International application number:
**PCT/IL2013/050770**

(87) International publication number:
**WO 2014/045275 (27.03.2014 Gazette 2014/13)**

(54) **A METHOD FOR FILLING BOTTLES**

VERFAHREN ZUM FÜLLEN VON FLASCHEN

PROCÉDÉ PERMETTANT DE REMPLIR DES BOUTEILLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2012  IL 22202312**

(43) Date of publication of application:
**23.09.2015  Bulletin 2015/39**

(73) Proprietor: **The Central Bottling Company Ltd.
51104 Bnei-Brak (IL)**

(72) Inventor: **MARON, David
43229 Raanana (IL)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**EP-A1- 0 489 589        EP-A1- 1 908 688
WO-A1-96/17529        DE-A1- 2 707 004
GB-A- 2 134 496        GB-A- 2 134 496
US-A- 4 747 253        US-A1- 2002 197 364
US-A1- 2004 035 089**

**Description**

FIELD OF THE INVENTION

The present invention relates to a method of filling non-carbonated beverages into thin-walled containers stabilized by internal pressure. More specifically, the present invention relates to dissolving gas in liquid to properly control the internal pressure of flexible or semi-flexible containers during and after processing.

BACKGROUND OF THE INVENTION

Typical beverages can be in general classified into carbonated and noncarbonated classes of beverages. Traditional glass containers have been the mainstay for more than a century. However, the increasingly popular flexible or semi-flexible containers raise the attention to a proper control of the internal package pressure during and after processing.

Carbonated beverages, being oversaturated, require the flexible packaging to withstand the positive higher internal pressure compared to the external atmospheric pressure. Noncarbonated beverages, particularly when processed in hot filling, are associated with negative internal pressure compared to the surrounding pressure. The hot filling follows usually a thermal disinfection process, and thus, as the product is cooled (for instance, on the shelf), a negative pressure drop is developed, whereby the external pressure exerted on the packaging is higher than the internal pressure. To overcome the pressure difference, i.e., to increase the internal pressure to a level comparable with the external pressure, beverages and food industries have long utilized nitrogen gas for bottling and packaging applications.

In most related technologies, a micro-controlled drop of liquid nitrogen is injected into the container before it is capped and sealed. The basic idea behind most technologies is that when a small amount of liquid nitrogen hits the surface of the beverage or comes into the beverage core, it vaporizes and provides a pressure in the gas phase. In fact, and from the physical point of view, the cold liquid nitrogen (-190°c), expands immediately into gaseous nitrogen as it is exposed to the environment (at room temperature). Probably, for hot fill process, the evaporation process of the small drop might be more rapid and dramatic. Therefore, pressure build-up by so-called gentle nitrogen spray, just before sealing, on top of the beverage just before capping, requires an accurate charge of liquid nitrogen and a precisely timed drop of the liquid nitrogen into the head space of the container (bottle or can, etc.). Since the nitrogen injection is made individually per container, appropriate specialized installations are required to ensure a high purity precision of nitrogen dosing at various line speeds.

WO 99/02406 discloses a method of producing a liquid product packed in cans or bottles or other suitable containers. The method includes injecting one or more of nitrogen, carbon dioxide and nitrous oxide gas into the liquid product. One preferred feature of the method is to chill the liquid product prior to injecting gas. Another preferred feature is to add liquid nitrogen to the head spaces of filled containers before closing the containers.

US 2004/0035089 describes a method and installation for packaging a liquid product in thin-walled packages using an inert gas, such as nitrogen; and/or carbon dioxide, in the gaseous state that is introduced into the chilled liquid by means of an injector, the liquid becoming saturated or supersaturated with which gas(es).

GB 2134496 describes a method of filling cans with substantially non-carbonated drinks according to the preamble of claim 1, in which method $N_2$ gas and $CO_2$ gas are dissolved as a mixture under pressure in the drink. Then, a predetermined quantity of the drink is introduced into the can at the same temperature and pressure at which the $N_2$ and $CO_2$ gases were dissolved in predetermined ratio in the drink and $N_2$ gas and/or a $CO_2$ containing inert gas is supplied over the surface of the drink in the can, substantially replacing the air in the head space in the can, while the can is open between the filling and sealing of the can.

GB 2241941 describes a method of charging containers, especially thin-walled cans, with a low-carbonated liquid such as beer including dissolving carbon dioxide in the liquid, and dissolving nitrogen in the liquid while circulating the liquid through a chiller and thus the dissolution is carried out at a suitable sub-ambient temperature.

EP 0489589 describes a method for canning of a non-carbonated liquid food product according to which nitrogen is dissolved in the product at a temperature between 0 and 4°C where the product is held under nitrogen pressure in a holding tank for a period of time sufficient to permit froth to subside. The filled cans are thereupon closed fluid-tight, and the nitrogen comes out of solution in each closed can to create a super atmospheric pressure therein.

As seen above, in all methods the liquid product is chilled prior to injecting gas, and in some methods, liquid nitrogen is added to the head spaces of filled containers before closing the containers. However, all relevant prior art references emphasize the need that a liquid has to be sufficiently oversaturated in order to ensure a sufficient amount of gas (nitrogen) in the product when sealed. As such, prior methods comprise injecting nitrogen few times the amount required to saturate the beverages, and/or including the step of chilling the liquid product to a predetermined temperature, and/or introducing a gas mixture of $CO_2/N_2$ in the product (with predetermined ratio), assuming that super saturated liquid in nitrogen is able to retain the nitrogen in excess of the saturation level over a prolonged period.

Moreover, in most prior methods, in addition to injecting nitrogen into the liquid, an additional gas $N_2$ and/or $CO_2$ is supplied over the surface of the product in the container while the container is still open between filling and sealing the container. This raised great difficulties of control and/or complicated synchronization.

It is worth noting at this point that the more saturated the liquid phase - the more dramatic and intensive is the gas escape. Besides, supersaturation is physically a less defined state and hence more difficult to control. As is shown herein, oversaturation is not necessarily needed in order to properly control the internal pressure of flexible or semi-flexible containers during and after processing.

Thus, an aim of the present invention is to provide a general method and comprehensive principles for pressure build-up and control in a hot fill process of noncarbonated products. A method by which the exact amount of gas (or its corresponding pressure) required for a proper control of the final (shelf) internal pressure of flexible or semi-flexible containers is determined, and thus, prevents unnecessary oversaturation and gas waste.

Another aim of the present invention is to treat the complete line of production, or filler in accordance to the local pressure/temperature conditions rather than dealing with moving single containers. In contrast to gas-flush systems and to methods dispensing nitrogen drop for each bottle in separate. Thus, the proposed method is nitrogen gas saving and independent of line stoppage, line speed variation or any break time problems associated with other line equipment.

Last and not least, since the proposed method is associated with a well-defined physical state, it is easy to design and control.

## DETAILED DESCRIPTION OF THE INVENTION

One of the features of the present invention is to operate (the filling) with sub-saturated liquid state so that the escape of the gas is not dramatic but of a minor effect.

The gas may be nitrogen or any other inert gas selected in accordance to the required pressure build-up, the product properties, filling conditions (e.g. filling temperature for instance), location of gas injection along the line, etc. For instance, but not according to the invention, carbon dioxide, $CO_2$, could be used for an internal pressure build-up to balance the external ambient pressure, $P_\infty = 1$ atm. In this case, a very light carbonated water may be obtained. For $T = 25°C$ and $P_\infty = 1$ atm, the equilibrium solubility of $CO_2$ gas which may balance the ambient pressure is around 1.5 gr/l, far from regular carbonated beverages, but still not negligible and thus cannot be disregarded. However, after opening, the $CO_2$ concentration may decrease since the external $CO_2$ ambient concentration is $\sim 1$ %. Thus, the carbonation effect is practically of a very minor level and diminishes immediately after opening.

It is worth noting that health consideration between light carbonated or carbonated water relate mainly to the level of hydration. Some argue that carbonation may lead to the risk of dehydration (by developing pressure on the kidneys e.g.). On the other hand, researches have identified some health benefits of light carbonated water. Indeed, the health difference between carbonated and noncarbonated drinks is still under intense debate.

Thus, utilizing $CO_2$, the low level of $CO_2$ used may bear a two-fold goal: (1) pressure build-up, and (2) light carbonated products at a desired level.

Another application for the method and principles presented above, is the use of nitrous oxide (laughing gas), $N_2O$, for pressure build-up and consequently for light gasification. Nitrous oxide is a non-toxic gas which is not flammable, has no color or odor, is slightly sweet and does not imitate. Therefore, it is widely used in the field of medicine, recreation, cooking and is licensed as food additive. The nitrous oxide gas is used in food services, e.g. cooking sprays, because it prevents the growth of bacteria, or it is filled in snack foods to displace the bacteria. It is also utilized as a foaming or mixing agent (in dairy processes for example, in making whipped cream, etc.).

Aside from being an important component of food production, e.g. nitrous-oxide cartridges are popular and are government approved food additives. It is also becoming a common alternative to carbon dioxide (cartridges) for cooling food products.

It is worth noting that nitrous oxide is considered to be a comparatively quite safer sedative even if inhaled accidentally. There is no "hangover" effect - the gas is eliminated from the body within 3-5 minutes after the gas supply is stopped. Nitrous oxide is not an allergen. Some side effects appear only if administered in very high doses and for a very long period in breathing. As such it is a popular source of entertainment and enjoyment. It is a real challenge nowadays for regulating the use of $N_2O$ is to avoid shifting recreational use towards other intensive methods.

Another property of $N_2O$ is that it is inert at room temperature and it dissolves in water to give neutral solution. The equilibrium that exists when nitrous oxide is dissolved in water lies far to the left:

$$N_2O + H_2O = H_2\,N_2\,O_2 \qquad (7)$$

In view of the above, utilizing nitrous oxide for pressure build-up (clearly not in breathing) and in relatively small concentrations (due to its high Henry constant, see below), may result in very moderate gasified products having a light characteristic of "happy drink", absolutely safe (as you can drive home and don't need an escort), and can be produced with various controlled levels of gasification. Again, the aim of utilizing nitrous oxide is two-folds; first, for pressure build-up in practically very low concentration or for both pressure build-up and in happy light products in mild concentrations.

Utilizing micro/nano bubbles gasification:

Micro/nano bubbles are relatively of small rise velocity and are generated by various types of generators. In contrast to ordinary macro-bubbles which rise rapidly and burst at the interface, micro bubbles remain suspended in the liquid for an extended period and dissolve in the liquid phase.

One of the most important features of micro/nano-bubbles is their high surface area to volume ratio which leads to high solubility in liquid and to an extremely stable late super-saturation solution.

In view of the above characteristics of micro/nano-bubbles, the gasification process (carbonation or nitrogenation) is carried out by utilizing micro/nano-bubbles. Compared to the scale-time of filling containers (cans and bottles) up to their complete sealing which is of the order of seconds, micro-bubbles may maintain late supersaturation due to their long life term before being completely dissolved.

As a direct result, the gas volume ($CO_2$, $N_2$ or $N_2O$) is retained in the bubble and is released to the gas phase (head space) only after sealing the containers and after the product is cooled to the shelf temperature. Moreover, since gas is not released at the hot temperature, the initial pressure in the head space will not increase immediately after sealing the container (due to immediate intense gas escape as associated with oversaturation), but instead, the pressure in the head space will decline and gas will escape the liquid phase to compensate such decline only sometime after the product cools down.

SUMMARY OF THE INVENTION

In accordance with the present invention, there is provided a method of filling flexible walled containers with liquid according to claim 1.

Further aspects of the invention are defined by the dependent claims. Furthermore a filling method may comprise:

providing a non-carbonated liquid in a filler unit;
dissolving a suitable gas in said non-carbonated liquid at a sub saturation level at a first temperature in a first container;
transferring the non carbonated liquid containing the dissolved gas into flexible walled containers to fill the containers to the top or to fill a pre-specified portion of the containers leaving an unfilled portion of the flexible walled containers as a head space and the liquid is in equilibrium or non equilibrium with the gas in the head space;
closing the containers tightly;
allowing the non-carbonated liquid containing the dissolved gas to reach a second temperature;

whereby when the second temperature is lower than the first temperature, the volume of liquid decreases creating a headspace in said containers which were filled to the top or increasing the headspace in said containers in which a pre-specified portion was filled, water vapors condense and the equilibrium is disturbed, as a result, the dissolved gas in the liquid and the gas in the head space reach a new equilibrium. The gas in the head space maintains the pressure within the container to prevent deformation of the walls during normal handling,
wherein the head space has a volume fraction that determines the required pressure of the dissolved gas in the non-carbonated liquid in order to produce a desired pressure build-up in the head space. Dissolving gas in said non-carbonated liquid can be done anywhere along the line and not necessarily in the filler.

Furthermore, a filling method may comprise:

providing a non-carbonated liquid;
passing the non-carbonated liquid through a buffer tank and through a filtering system;
pasteurizing the non-carbonated liquid;
dissolving a suitable gas in said non-carbonated liquid;
passing the non-carbonated liquid containing the dissolved gas into a filler unit; and
transferring the non-carbonated liquid containing the dissolved gas from the filler unit into containers and closing the containers.

Furthermore, a filling method may comprise:

providing a non-carbonated liquid;
passing the non-carbonated liquid through a buffer tank and through a filtering system;
pasteurizing the non-carbonated liquid;

passing the non-carbonated liquid into a filler unit;
feeding a suitable gas into the filler unit; and
transferring the non-carbonated liquid containing the gas from the filler unit into containers and closing the containers.

Furthermore, a filling method may comprise:

providing a non-carbonated liquid;
passing the non-carbonated liquid through a buffer tank and through a filtering system;
pasteurizing the non-carbonated liquid;
passing the non-carbonated liquid into a filler unit;
exiting the non-carbonated liquid from said filler unit and transferring the non-carbonated liquid into containers, while transferring the non-carbonated liquid into containers, dissolving a suitable gas, and then closing the containers.

Furthermore, the gas is an inert suitable gas.
Furthermore, the suitable gas may be selected from $N_2$, $N_2O$, or any combination of these.
Furthermore, the gas provides pressure build-up.
Furthermore, the gas may be $N_2O$ which provides pressure build-up.
Furthermore, the $N_2O$ may create a happy mood light product.
Furthermore, the non-carbonated liquid may comprise one or more components.
Furthermore, pasteurization is carried out at an elevated temperature ranging from 60 to 90°C.
Furthermore, feeding the gas into the non-carbonated liquid is carried out at a temperature ranging from ambient to 95°C.
Furthermore, the above method further comprising keeping the liquid temperature ($T_L$) ranging in the filler unit from ambient to 95°C.
Furthermore, the pressure along the feed line ranges from 1 to 10 bars.
Furthermore, the pressure at the entrance of the filler unit ranges from 1 to 10 bars.
Furthermore, the containers are kept at around the ambient temperature or below.
Furthermore, the above method
may

further comprise adding a pump to a feed line to raise the pressure of the non-carbonated liquid prior to its entry into the filler unit. Furthermore, the containers are

either open or closed to the atmosphere during filling.
Furthermore, the above method
may

further comprise keeping the walls of the containers at ambient temperature or below during and after filling.

A filling method may comprise:

introducing a suitable gas at a sub-saturation level in the form of micro/nano-bubbles into a non-carbonated liquid at a first temperature in a first container;
transferring the non-carbonated liquid containing the micro/nano-bubbles into containers to fill the containers to the top or to fill a pre-specified portion of the containers leaving an unfilled portion of the flexible walled containers as a head space and the gas in said non-carbonated liquid is in equilibrium or non-equilibrium with the gas in the head space;
closing the containers tightly; and
allowing the non-carbonated liquid containing the micro/nano-bubbles to reach a second temperature that is lower or higher than the first temperature;

whereby when the second temperature is lower than the first temperature, the volume of liquid decreases creating a headspace in said containers which were filled to the top or increasing the headspace in said containers in which a pre-specified portion was filled, water vapors condense, and the equilibrium is disturbed, as a result, the micro/nano-bubbles dissolve in the liquid and the deformation of the walls during normal handling wherein the head space has a volume fraction that determines the required pressure of the dissolved gas in the non-carbonated liquid in order to produce a desired pressure build-up in the head space.
Furthermore, the second temperature may be lower than the first temperature. Furthermore, the second temperature may be higher than the first temperature.

It should be noted that the pressure build-up in the head space is the most significant characteristic of the present invention. The pressure build-up in the head space is highly important as it keeps the containers safe for long periods of time. The volume of the head space in the containers determines the required pressure of the dissolved gas in the non-carbonated liquid to produce pressure build-up in the head space and/or gasification of the non-carbonated liquid.

BRIEF DESCRIPTION OF THE FIGURES

Fig. 1 is a schematic illustration of a process for pressure build-up and control in a hot or cold -fill line of non-carbonated products.

Fig. 2 is a schematic illustration of a process identical to the process illustrated in Fig. 1 aside for an additional pump.

Figs. 3 and 4 elaborate the principles of sub-saturation operations.

DETAILED DESCRIPTION OF THE FIGURES

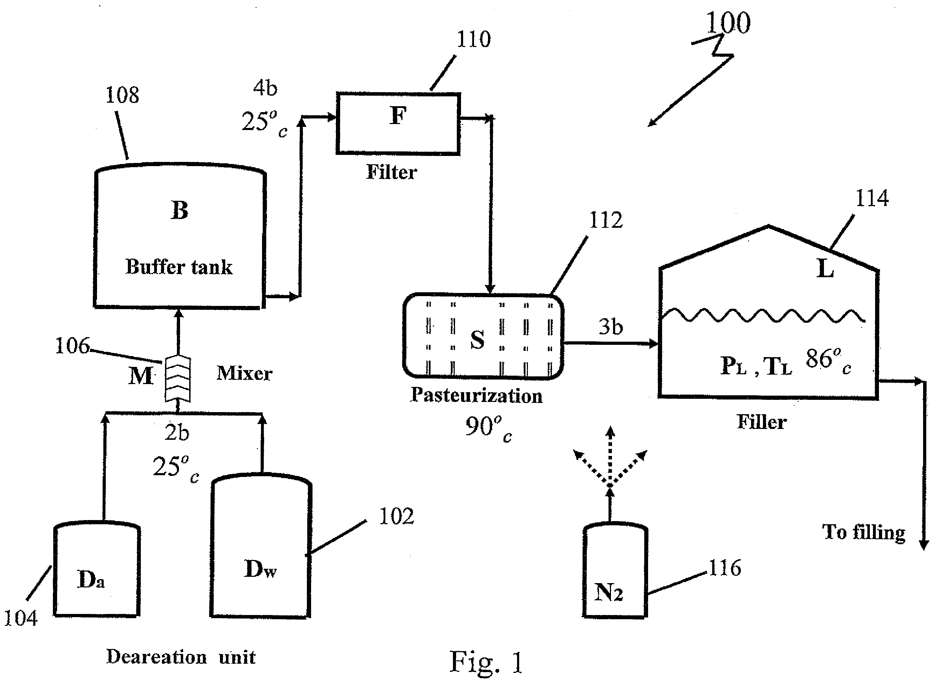

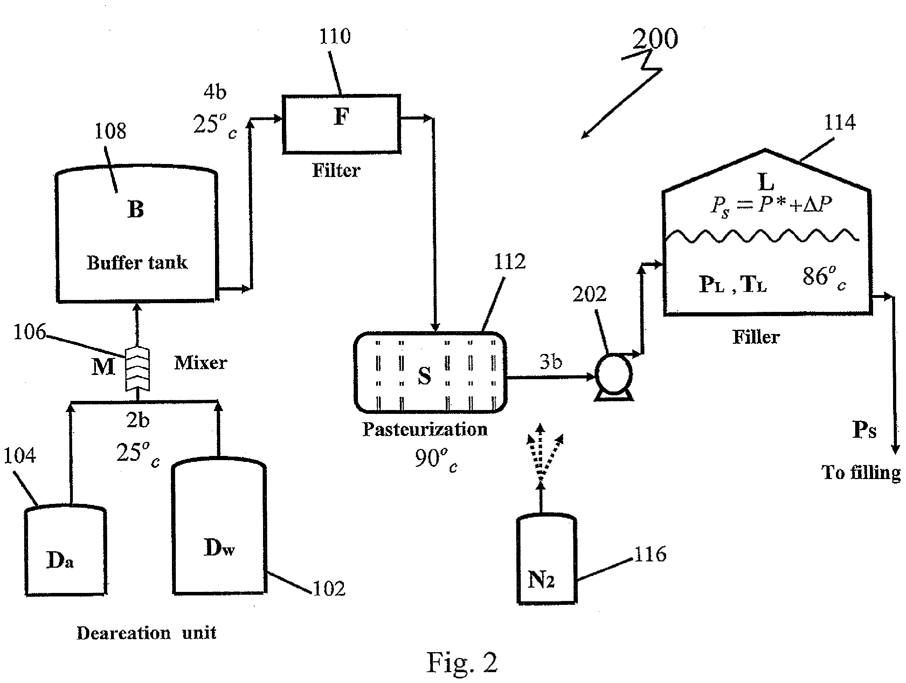

The processes illustrated in Figs. 1 and 2 enable maintaining a sub-saturation level throughout the entire hot or cold -fill line of non-carbonated products, the hot fill line being in accordance with the present invention. The general case of varying temperature along the line is elaborated below.

Referring now to Fig. 1 which is a schematic illustration of a process 100 for pressure build-up and control in a hot-fill line of non-carbonated products.

As seen in Fig. 1, water 102 and component A 104 are mixed in mixer unit 106. The well mixed product is then passed through a buffer tank 108 to a filtering system 110. The temperature so far remains practically unchanged (around 25°C).

Pasteurization by heat takes place at the thermal unit 112, wherefrom the product is transferred to and maintained in the filler unit 114, at a temperature, $T_L$, ranging from 86°C to 90°C. Nitrogen gas 116, from a Nitrogen source $N_2$ (or any other gases as noted above), is fed into the feed line to the filler unit 114, at pressure $P_i > P_L$, where $P_L$ is the pressure at the filler unit 114. The pressure, $P_L$, is maintained at its required (design) value, by the aid of the Nitrogen 116. It should be noted, however, that Nitrogen can be injected anywhere along the line.

Generally, in practice the pressure along the line is roughly about 4 bars. However, due to pressure drop along the line, the pressure at the entrance of the filler unit 114 is somewhat lower, i.e., about 2-3 bars.

From the filler unit 114, the product is fed into the containers which are usually kept at a surrounding temperature of 25°C.

Fig. 2 is a schematic illustration of a process 200 which is identical to process 100 in most parts aside for pump 202 which is additional to process 200. Pump 202 raises the pressure of the product prior to its entry to filler 114.

Process 100 is of a typical line, whereby the pressure is highest at the entry and decreases along the line, whereas process 200 includes a pressure rise downstream due to pumping of the product to the filler unit 114. Thus, process 100 is characterized by low pressure at the filler unit 114 while in process 200 the pressure at the filler unit 114 is higher than that of the upstream. These two processes are further analyzed below with regard to maintaining a sub-saturation level throughout the entire line.

In both process 100 and process 200, the product in the filler unit 114 may be in equilibrium or under-saturation corresponding to the pressure $P_L$ and temperature $T_L$ (86°C, for instance). From the filler unit 114, the product is fed into the containers which are usually at the surrounding temperature of 25°C. The containers may be either close or open at the filling process.

Based on the value of the Henry's law constant at $T_L$=86°C for Nitrogen in water, the solubility at the filler unit 114 can be calculated as follows:

$$P = H(T) \times C. \tag{1}$$

For illustration, the variation of Henry constant (coefficient) with temperature is estimated by the so-called Van't Hoff relation, whereby;

$$H(T) = H(T_0) \exp\left[-C_i \left(\frac{1}{T} - \frac{1}{T_0}\right) \frac{1}{T_0}\right]; \tag{2a}$$

For Nitrogen, the corresponding values for $C_i$ and $H(T_0)$ are;

$$C_i = 800 \tag{2b}$$

and

$$T_0 = 298.15°K; H(T_0) = 1639.34 \tag{2c}$$

An analysis of the physical situation at the filling point for two cases of open and closed containers is presented as follows:

Table 1 presents typical calculated values of pressure build-up as function of the filler pressure, $P_L$, in a single phase (liquid) closed system.

| Filler pressure $P_L$ atm | $C_L^*(P_L, T_L=86°C)$ gr/liter | P*(25°C) | $\triangle$ ps | P*(15°C) | $\triangle$Cs | $\triangle$ Cr1 | $\triangle$ Cr2 |
|---|---|---|---|---|---|---|---|
| 2 | 0.022 | 1.25 | 0.25 | 1.16 | 0.011 | 2 | 1.29 |
| 2.5 | 0.027 | 1.6 | 0.6 | 1.44 | 0.016 | 2.4 | 1.59 |
| 3 | 0.032 | 1.9 | 0.9 | 1.73 | 0.021 | 2.9 | 1.88 |
| 3.5 | 0.038 | 2.2 | 1.2 | 2.02 | 0.027 | 3.4 | 2.23 |
| 4 | 0.043 | 2.54 | 1.54 | 2.3 | 0.032 | 3.9 | 2.53 |

For the present demonstration in Table 1, a constant temperature of $T_L$ =86°C corresponding to a hot fill process is used. CL* denotes the equilibrium solubility at $(P_L, T_L)$, based on the Henry - constant at $T_L$.

The filler pressure, $P_L$, is varying from 2.0 to 2.5, 3.0, 3.5 and 4.0. For each value of $P_L$, the corresponding concentration CL* is calculated and used for calculating the resulting pressure at 25°C. However, according to the values of P*(25) in table 1, one can operate at sub-saturation level to yield P*(25)=1.0 atm.

Thus, assuming (at first), that the filling process is fast enough, hence there is no nitrogen loss prior to sealing, then, the new equilibrium pressure at various temperatures is predicted. For instance, at a common shelf temperature of 25°C, the corresponding pressure P*(25°C) is always higher than atmospheric pressure, when the design filler pressure is $P_L$>2 atm. As the product cools to 15°C (for instance before use), the internal pressure P*(15°C) is still sufficient to resist the external ambient pressure, $P\infty$ = 1 atm.

Also included in Table 1, is the super-saturation at the shelf temperature, T = 25°C, defined in terms of pressure difference as;

$$\triangle \text{ ps} = p*(25°C) - P\infty \tag{3}$$

Note that, $\triangle$ ps stands for pressure difference above the ambient pressure, and it represents the driving force for the gas to escape .Since p*(25°C) is the equilibrium pressure at the container walls $T_L$=25°C. As seen in Table 1, $\triangle$ ps is relatively low, sustaining the assumption of minor gas loss.

Another parameter $\triangle$ Cs can be defined in terms of the solubility difference as;

$$\triangle \text{ Cs} = C*(P_L, 86°C) - C*(P\infty, 86°C) \tag{4}$$

where $C*(P_L, 86°C)$ is the solubility at the filling temperature and filler pressure, $P_L$ and $C*(P\infty, 86°C)$ is the solubility at the filling temperature and container pressure, $P\infty$ = 1 atm. Thus, C*(1, 86°C) = 0.011 gr/l by eq (1).

The parameter $\triangle$ Cs represents the intensity or the physical driving force that liquid will reject the dissolved gas while filling. However, since the container walls are practically at 25°C during the filling process, this intensity can be related to C*(1 atm, 25°C) = 0.017 gr/l rather than to C*(1 atm, 86°C) =0.011 gr/l. Included in Table 1 are the ratios $\triangle$ Cr$_1$ and $\triangle$ Cr$_2$, which are the ratio of the equilibrium concentration at the filler, $C*(P_L, 86°C)$ to either C*(1 atm, 86°C) or C*(1atm, 25°C), respectively;

$$\Delta Cr_1 = C^*(P_L, 86°C) / C^*(1, 86°C) \qquad (5)$$

$$\Delta Cr_2 = C^*(P_L, 86°C) / C^*(1, 25°C) \qquad (6)$$

Clearly, $\Delta Cr2 < \Delta Cr1$ implies that gas nucleation which usually may initiate at the walls but is rather moderate, sustaining the assumption that the gas loss during the relatively short time filling is practically minor. As such, filling containers of relatively cold walls are preferable from the point of view of holding the nitrogen in the bulk product.

Note that the analyses so far relate to the liquid phase alone; this is consistent with the assumption that the gas escape is minor. However, simultaneous two-phase modeling of the gas - liquid interaction can be carried out, if the head space volume is known. A rather more complicated calculation procedure yields whereby, the distribution of the nitrogen gas in both the liquid and gas phases. Such calculation procedure, which includes mathematical modeling as well as empirical solutions, reveals the dramatic effects of the head space in various filling conditions as indicated in tables 2-4.

Tables 2-4 represent typical results for a variety of possible operations in two-phase systems where:

$P_0$ denotes the initial pressure at the head space at filling,

$V_G/V_L$ is the head space fraction,

$P_2$ is the design required pressure at temperature $T_2$(=25°C for the purpose of illustration), and

$P_1$ is the required filler pressure at temperature $T_1$(=86°C for the purpose of illustration), which is required to yield the desired pressure $P_2$.

Table 2 presents calculated values for various head space ratios in a two-phase open system where the head space is initially occupied by nitrogen $P_0$=1.0 atm).

| $P_0$ atm | VG/VL % | $T_2$ 25° C | P2 at 25° C | T1 86°C | P1t at 86°C | P1 at 86°C | P3 at 10°C | *C2 at 25°C |
|---|---|---|---|---|---|---|---|---|
| 1.00 | 5 | 25 | 1.25 | 86 | 1.58 | 4.05 | 1.16 | 0.021 g/l |
| 1.00 | 3 | 25 | 1.25 | 86 | 1.62 | 3.20 | 1.15 | 0.021 |
| 1.00 | 2 | 25 | 1.25 | 86 | 1.66 | 2.77 | 1.14 | 0.021 |
| 1.00 | 1 | 25 | 1.25 | 86 | 1.73 | 2.34 | 1.13 | 0.021 |
| 1.00 | 3 | 25 | 1.10 | 86 | 1.43 | 2.51 | 1.02 | 0.019 |

Table 3 presents calculated values for various head space ratios in a two-phase open system where the head space is initially occupied by air ($P_0$=0.79$N_2$).

| $P_0$ atm | $V_G V_L$ % | T2 25° C | P2 at 25°C | T1 86°C | P1t at 86°C | P1 at 86°C | P3 at 10°C | *C2 at 25°C |
|---|---|---|---|---|---|---|---|---|
| 0.79 | 5 | 25 | 1.25 | 86 | 1.58 | 4.93 | 1.16 | 0.021 |
| 0.79 | 3 | 25 | 1.25 | 86 | 1.62 | 3.73 | 1.15 | 0.021 |
| 0.79 | 2 | 25 | 1.25 | 86 | 1.66 | 3.12 | 1.14 | 0.021 |
| 0.79 | 1 | 25 | 1.25 | 86 | 1.73 | 2.52 | 1.13 | 0.021 |
| 0.79 | 3 | 25 | 1.10 | 86 | 1.43 | 3.04 | 1.02 | 0.019 |

As the filling pressure comes to an end, the new equilibrium pressure, immediately after sealing, is denoted by P1t. As the temperature decreases to $T_2$ =25°C or $T_3$=10°C, the corresponding pressures are $P_2$ and $P_3$. Included in the tables are also the concentration $C_2^*$(25°C).

In principle, accounting for a given head space volume, a higher filler pressure is required to ensure the final P*(25°C). For instance, as shown in Table 1, in order to end up with gas pressure of P(25°C)=1.25 atm in a single phase (liquid) system, the required filler pressure is 2 atm. However, as shown in Table 2, in a two phase (liquid/gas) system, assuming the head space is 3%, the required filler pressure at 86°C is 3.2 atm. If the head space volume is about 2% of the total container volume, the required filler pressure decreases to 2.77 atm. Clearly, if the required final pressure is lower for instance, if $P_2$ (25°C) is only 1.1 atm, the filler pressure will be only 2.51 atm for head space fraction of 3%.

Seen in Table 3, as open container initially occupied with air ($0.79N_2$), the required filler pressure also increases, i.e., the required filler pressure for a 3% head space is 3.73 atm and 3.12 atm for 2% head space, compared to 3.2 and 2.77 atm respectively, when the head space is initially filled with pure nitrogen as in Table 2.

Another mode of interest is presented in Table 4, which refers to a closed system rather than open systems as presented in tables 2 and 3.

Table 4 presents calculated values of pressure in the liquid phase in a two-phase closed system.

| $P_0$=Psat (atm) Closed-bottle filling | VG/VL % | T2 25°C | P2 at 25°C | T1 86°C | P1t at 86°C | P1 at 86°C | P3 at 10°C | *C2 at 25°C |
|---|---|---|---|---|---|---|---|---|
| 1.58 | 5 | 25 | 1.25 | 86 | 1.58 | 1.58 | 1.16 | 0.021 |
| 1.62 | 3 | 25 | 1.25 | 86 | 1.62 | 1.62 | 1.15 | 0.021 |
| 1.66 | 2 | 25 | 1.25 | 86 | 1.66 | 1.66 | 1.14 | 0.021 |
| 1.73 | 1 | 25 | 1.25 | 86 | 1.73 | 1.73 | 1.13 | 0.021 |
| 1.43 | | 25 | 1.10 | 86 | 1.43 | 1.43 | 1.02 | 0.019 |

In this case, the filling process is carried out at a counter pressure identical to the pressure in the filler 114. In fact, the containers are practically closed during the filling process and the initial pressure in the containers is the filler pressure. This mode of filling is generally used in carbonated products.

A comparison between the parameters of Table 4 with the corresponding parameters of Tables 2 and 3 indicates that the required filler pressures are much lower in the case of filling closed containers with counter pressure.

It should be noted that in hot fillings, the vapor pressure of the liquid (water) is significant. For instance, at 86°C the vapor pressure is nearly 0.6 atm. Therefore, the partial pressure of the gas (of Nitrogen, for instance) just above the liquid interface is about 0.4 atm. An initial partial pressure of 0.4 atm instead of 1 or 0.79 atm yields higher P1 values than those in tables 2 and 3. Some typical values for comparison are shown in Table 5. Inspection of Tables 2, 3, and 5 indicates that it is of high importance to reduce the head space as much as possible particularly in hot fill processes.

Table 5 presents calculated values for various head space ratios in a two-phase open system where the head space is initially occupied by nitrogen and vapor.

| $P_0$ atm | VG/VL % | T2 25° C | P2 at 25° C | T1 86°C | P1t at 86°C | P1 at 86°C |
|---|---|---|---|---|---|---|
| 0.4 | 3 | 25 | 1.25 | 86 | 1.62 | 4.71 |
| 0.4 | 2 | 25 | 1.25 | 86 | 1.66 | 3.78 |
| 0.4 | 1 | 25 | 1.25 | 86 | 1.73 | 2.85 |
| 0.4 | 3 | 25 | 1.04 | 86 | 1.43 | 3.73 |

It should be further noted that the illustrations so far relate to a filling temperature of $T_L$=86°C. Clearly, a filling temperature that is lower than 86°C requires a lower pressure, $P_L$ or $P_1$, to provide a shelf pressure of 1.25 atm (at 25°C).

In addition, it should be noted that the gas may be injected at any point along the line. For illustration of the effects of the location of gas injection, Table 6 includes various situations of pressure and temperature along the filling line, while pointing out in each case the minimal gas concentration to be used so that a sub-saturation is ensured through the whole line.

Table 6 presents data corresponding to injection of the gas along various locations of the filling line.

| Exp No. | $H_{N2}$ atm·lit/gm | 1639.3 | 2173.2 | 2585.8 | 1639.3 |
|---|---|---|---|---|---|
| | T(°C)= | 25 | 60 | 86 | 25 |
| 1 | $P_{atm}$ | 1 | 1 | 1 | 0.63 |
| | C=gr/l | 0.017 | 0.013 | Cm=0.011 | 0.011 |
| 2 | P | 1 | 2 | 2 | 1.06 |
| | C | 0.017 | 0.026 | 0.022 | Cm=0.018 |
| 3 | P | 1.24 | 2 | 2 | 1.24 |
| | C | 0.021 | 0.026 | 0.022 | Cm=0.021 |
| 4 | P | 3-4 | 3.5 | 2.5 | 1.6 |
| | C | 0.051-0.068 | 0.045 | Cm=0.027 | 0.027 |
| 5 | P | 3-4 | 3.5 | 2.75 | 1.74 |
| | C | 0.051-0.068 | 0.045 | 0.030 | 0.030 |

As seen in Table 6, for a constant pressure along the line as in Exp. No. 1, the minimal solubility $C_m$ is obviously at the high temperature of 86°C. In order to prevent foaming along the line, the gas should be injected at a point along the line in which the solubility is minimal.

For instance, if the pressure is roughly 1 atm along the line, then $C_m$ = 0.011 gr/l or corresponds to the highest temperature along the line (e.g., 86°C) which may produce an internal pressure of 0.63 atm at 25°C (see Exp. No. 1). On the other hand, if the pressure along the line is 2 atm. (Exp. No. 2) then the minimal solubility Cm = 0.022 gr/l which is higher than the solubility of 0.017 gr/l, required to produce an internal pressure of 1 atm at 25°C. Thus, if Cm = 0.022 gr/l is injected at the high temperature, then an internal pressure of 1.27 atm is produced at 25°C, and an injection of 0.018 gr/l yields an internal pressure of 1 atm. Alternatively, Cm = 0.021 gr/l can be injected at 25°C before the pasteurization phase) but with pressure of 1.24 atm, ensuring that no foams develop at 86°C and 2 atm (Exp. No. 3). Experiments Nos. 4-5 in Table 6, represent the general case of both pressure and temperature variations along the line. When the minimal concentration is injected, sub-saturation is ensured along the line while a sufficiently positive internal pressure at the shelf-temperature (25°C) still prevails.

It should be noted that the method and principles discussed above in relation to the schematic flow chart of Figures 1 and 2 can in fact be applied as well to any process for providing an internal pressure build-up as required.

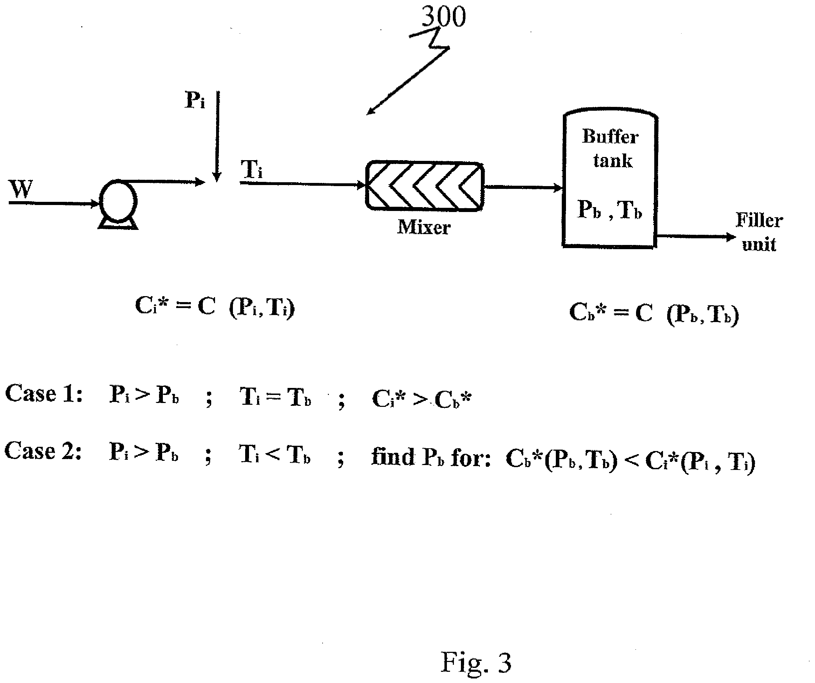

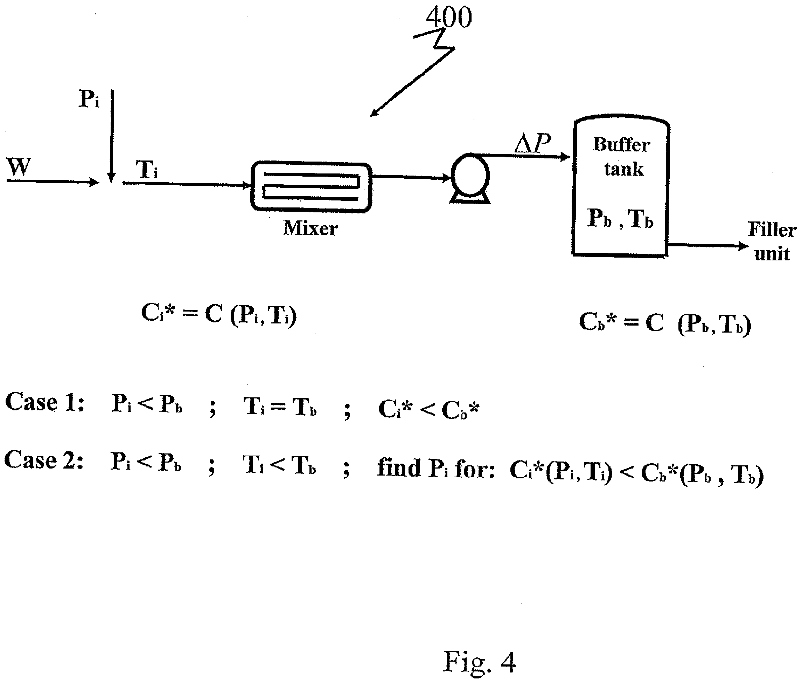

The principle of sub-saturation operation is further elaborated in Figs. 3 and 4. In mode A of Fig. 3, the pressure monotonously decreases towards the filler. In mode B of Fig. 4, on the other hand, the filling is carried out after raising the pressure to easily-controlled differential $\Delta P$, such that filler pressure is at $P_b = P^* + \Delta P$. Thus, in mode A, the lower concentration Cb(<Ci) is injected at the high pressure zone upstream, point I, while in mode B, the filler pressure/temperature conditions are known, and the upstream pressure at injection is evaluated, so that Ci<Cb. Again, in both modes sub-saturation states are ensured.

Beyond that, if micro/nano bubbles are used, late saturation or even oversaturation can be maintained for retaining the gas in the liquid bulk before approaching the gas-liquid interface.

It should be noted that the gas in the form of micro/nano bubbles can be injected into the liquid prior to entering to the filler, while in the filler, or after exiting the filler just before filling the containers.

**Claims**

1. A method of filling flexible walled containers with liquid, to produce a non-carbonated drink, leaving a head space and maintaining the integrity of the flexible walls after said filling, the method comprising:

    providing a filler unit (114) having an access conduit and an exit conduit for passing said liquid into the filler unit (114) and dispensing the liquid into the flexible walled containers;
    introducing gas into said liquid at an elevated temperature in any of the access conduit, the filler unit (114) and the exit conduit, or in any combination thereof,
    transferring the liquid containing the gas into flexible walled containers in a hot fill process to fill a portion of the containers leaving an unfilled portion of the containers as a head space;

closing the containers tightly; and
allowing the liquid containing the gas to reach a lower temperature, whereby the pressure in the head space prevents deformation of the flexible walls during normal handling,
**characterized in that**, in combination, the gas introduced into the liquid is an inert gas or N2O gas; and the gas is introduced into the liquid at a sub-saturated level and is maintained at the sub-saturation level throughout the entire hot fill process.

**2.** The method of claim 1, wherein introducing the gas into said liquid is in the form of micro/nano-bubbles.

**3.** The method in accordance with any one of claims 1-2, further comprising: passing liquid through a buffer tank and filtering system; and pasteurizing the liquid before introducing it into the filler unit.

**4.** The method in accordance with any one of claims 1-3, wherein said inert gas is $N_2$.

**5.** The method in accordance with any one of claims 1-4, wherein said inert gas or N2O provides pressure build-up and/or gasifies the liquid.

**6.** The method in accordance with claim 3, wherein the pasteurizing is carried out at an elevated temperature ranging from 86°C to 90°C

**7.** The method in accordance with any one of claims 1 -6, wherein the pressure of the liquid in the access conduit and/or filler unit and/or exit conduit ranges from 1 to 10 bars.

**8.** The method in accordance with any one of claims 1-7, further comprising pumping the liquid at a raised pressure prior to its entry into the filler unit.

**9.** The method in accordance with any of claims 1 -8, wherein the flexible walled containers are open to the atmosphere during filling.

**10.** The method in accordance with any of claims 1 -8, wherein the containers are closed to the atmosphere during filling.

**11.** The method in accordance with any one of claims 1-10, wherein the containers are provided at or below ambient temperature during and after filling.

**12.** The method of any one of claims 1->11, wherein the introducing of the gas into the liquid is carried out at a temperature up to 95°C.

**13.** The method of any one of claims 1-12, further comprising keeping the liquid temperature in the filler unit up to 95°C.

**Patentansprüche**

**1.** Ein Verfahren zum Füllen von Behältern mit flexiblen Wänden mit Flüssigkeit, um ein nicht kohlensäurehaltiges Getränk herzustellen, wobei ein Luftraum belassen wird und die Integrität der flexiblen Wände nach dem Füllen beibehalten wird, wobei das Verfahren die folgenden Schritte aufweist:

Bereitstellen einer Fülleinheit (114) mit einer Zugangsleitung und einer Ausgangsleitung zum Leiten der Flüssigkeit in die Fülleinheit (114) und zum Abgeben der Flüssigkeit in die Behälter mit flexiblen Wänden;
Einführen von Gas in die Flüssigkeit in einer der Zugangsleitung, der Fülleinheit (114) und der Ausgangsleitung oder einer Kombination derselben bei einer erhöhten Temperatur,
Transportieren der Flüssigkeit, die das Gas enthält, in die Behälter mit flexiblen Wänden bei einem Heißabfüllvorgang, um einen Abschnitt der Behälter zu füllen, wobei ein nicht gefüllter Abschnitt der Behälter als Luftraum belassen wird;
dichtes Verschließen der Behälter und
Zulassen, dass die Flüssigkeit, die das Gas enthält, eine niedrigere Temperatur erreicht, wodurch der Druck in dem Luftraum ein Verformen der flexiblen Wände während normaler Handhabung verhindert,
**dadurch gekennzeichnet, dass** in Kombination das in die Flüssigkeit eingeführte Gas ein inertes Gas oder $N_2O$-Gas ist und das Gas in die Flüssigkeit auf untersättigtem Niveau eingeführt wird und während des gesamten Heißabfüilvorgangs auf dem Untersättigungsniveau gehalten wird.

2. Das Verfahren gemäß Anspruch 1, wobei das Einführen des Gases in die Flüssigkeit in der Form von Mikro-/Nariobläschen erfolgt.

3. Das Verfahren gemäß einem der Ansprüche 1 bis 2, das ferner folgende Schritte aufweist: Leiten von Flüssigkeit durch einen Puffertank und ein Filtersystem und Pasteurisieren der Flüssigkeit vor einem Einführen derselben in die Fülleinheit.

4. Das Verfahren gemäß einem der Ansprüche 1 bis 3, bei dem das inerte Gas $N_2$ ist.

5. Das Verfahren gemäß einem der Ansprüche 1 bis 4, bei dem das inerte Gas oder $N_2O$ einen Druckaufbau bereitstellt und/oder die Flüssigkeit vergast.

6. Das Verfahren gemäß Anspruch 3, bei dem das Pasteurisieren bei einer erhöhten Temperatur im Bereich von 86 °C bis 90 °C ausgeführt wird.

7. Das Verfahren gemäß einem der Ansprüche 1 bis 6, bei dem der Druck der Flüssigkeit in der Zugangsleitung und/oder der Fülleinheit und/oder der Ausgangsleitung im Bereich von 1 bis 10 Bar liegt.

8. Das Verfahren gemäß einem der Ansprüche 1 bis 7, das ferner ein Pumpen der Flüssigkeit bei einem erhöhten Druck vor dem Eintritt derselben in die Fülleinheit aufweist.

9. Das Verfahren gemäß einem der Ansprüche 1 bis 8, bei dem die Behälter mit flexiblen Wänden während des Füllens zur Atmosphäre hin offen sind.

10. Das Verfahren gemäß einem der Ansprüche 1 bis 8, bei dem die Behälter während des Füllens zur Atmosphäre hin geschlossen sind.

11. Das Verfahren gemäß einem der Ansprüche 1 bis 10, bei dem die Behälter während und nach dem Füllen bei oder unterhalb der Umgebungstemperatur bereitgestellt werden.

12. Das Verfahren gemäß einem der Ansprüche 1 bis 11, bei dem das Einführen des Gases in die Flüssigkeit bei einer Temperatur von bis zu 95 °C ausgeführt wird.

13. Das Verfahren gemäß einem der Ansprüche 1 bis 12, das ferner ein Halten der Flüssigkeitstemperatur in der Fülleinheit bis zu 95 °C aufweist.

**Revendications**

1. Procédé de remplissage de contenants à parois souples par du liquide, pour produire une boisson non gazeuse, en laissant un espace de tête et en maintenant l'intégrité des parois souples après ledit remplissage, le procédé comprenant le fait de:

   prévoir une unité de remplissage (114) présentant un conduit d'accès et un conduit de sortie pour faire passer ledit liquide dans l'unité de remplissage (114) et distribuer le liquide dans les contenants à parois souples; introduire du gaz dans ledit liquide à une température élevée dans l'un ou l'autre parmi le conduit d'accès, l'unité de remplissage (114) et le conduit de sortie, ou dans l'une ou l'autre combinaison de ces derniers, transférer le liquide contenant le gaz dans des contenants à parois souples dans un processus de remplissage à chaud pour remplir une partie des contenants en laissant une partie non remplie des contenants comme espace de tête; fermer les contenants hermétiquement; et permettre au liquide contenant le gaz d'atteindre une température plus basse, grâce à quoi la pression dans l'espace de tête empêche la déformation des parois souples au cours d'une manipulation normale, **caractérisé par le fait que**, en combinaison, le gaz introduit dans le liquide est un gaz inerte ou un gaz $N_2O$; et le gaz est introduit dans le liquide à un niveau sous-saturé et est maintenu au niveau de sous-saturation pendant tout le processus de remplissage à chaud.

**2.** Procédé selon la revendication 1, dans lequel l'introduction du gaz dans ledit liquide se fait sous forme de micro/nano-bulles.

**3.** Procédé selon l'une quelconque des revendications 1 et 2, comprenant par ailleurs le fait de: faire passer du liquide à travers un réservoir tampon et un système de filtrage; et pasteuriser le liquide avant de l'introduire dans l'unité de remplissage.

**4.** Procédé selon l'une quelconque des revendications 1 à 3, dans lequel ledit gaz inerte est $N_2$.

**5.** Procédé selon l'une quelconque des revendications 1 à 4, dans lequel ledit gaz inerte ou $N_2O$ crée une accumulation de pression et/ou gazéifie le liquide.

**6.** Procédé selon la revendication 3, dans lequel la pasteurisation est réalisée à une température élevée allant de 86°C à 90°C.

**7.** Procédé selon l'une quelconque des revendications 1 à 6, dans lequel la pression du liquide dans le conduit d'accès et/ou l'unité de remplissage et/ou le conduit de sortie est comprise entre 1 et 10 bars.

**8.** Procédé selon l'une quelconque des revendications 1 à 7, comprenant par ailleurs le fait de pomper le liquide à une pression élevée avant son entrée dans l'unité de remplissage.

**9.** Procédé selon l'une quelconque des revendications 1 à 8, dans lequel les contenants à parois souples sont ouverts à l'atmosphère pendant le remplissage.

**10.** Procédé selon l'une quelconque des revendications 1 à 8, dans lequel les contenants sont fermés à l'atmosphère pendant le remplissage.

**11.** Procédé selon l'une quelconque des revendications 1 à 10, dans lequel les contenants sont prévus à ou au-dessous de la température ambiante pendant et après le remplissage.

**12.** Procédé selon l'une quelconque des revendications 1 à 11, dans lequel l'introduction du gaz dans le liquide est réalisée à une température de jusqu'à 95°C.

**13.** Procédé selon l'une quelconque des revendications 1 à 12, comprenant par ailleurs le fait de maintenir la température du liquide dans l'unité de remplissage à 95°C.

Fig. 1

EP 2 920 106 B1

110

4b
25°c

F

Filter

108

B

Buffer tank

106

M  Mixer

2b
25°c

104

Da

Dw

102

Deareation unit

200

114

L
$P_S = P* + \Delta P$

$P_L , T_L$  86°c

Filler

112

202

S

Pasteurization
90°c

3b

N2  116

$P_S$

To filling

Fig. 2

$$C_i^* = C \ (P_i, T_i)$$

$$C_b^* = C \ (P_b, T_b)$$

Case 1:  $P_i > P_b$  ;  $T_i = T_b$  ;  $C_i^* > C_b^*$

Case 2:  $P_i > P_b$  ;  $T_i < T_b$  ;  find $P_b$ for: $C_b^*(P_b, T_b) < C_i^*(P_i, T_i)$

Fig. 3

$$C_i^* = C\,(P_i, T_i) \qquad\qquad C_b^* = C\,(P_b, T_b)$$

**Case 1:** $P_i < P_b$ ; $T_i = T_b$ ; $C_i^* < C_b^*$

**Case 2:** $P_i < P_b$ ; $T_i < T_b$ ; find $P_i$ for: $C_i^*(P_i, T_i) < C_b^*(P_b, T_b)$

Fig. 4

EP 2 920 106 B1

**EP 2 920 106 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9902406 A
- US 20040035089 A
- GB 2134496 A
- GB 2241941 A
- EP 0489589 A